# EUROPÄISCHE PATENTSCHRIFT

(11) **EP 3 274 216 B1**
(45) Veröffentlichungstag und Bekanntmachung des Hinweises auf die Patenterteilung: **09.10.2019**
(21) Anmeldenummer: 16718994.3
(22) Anmeldetag: 18.03.2016
(51) Int. Cl.: F21S 41/141, F21S 41/16, F21S 41/143, F21S 41/663

(54) **BELEUCHTUNGSVORRICHTUNG FÜR FAHRZEUGSCHEINWERFER**
LIGHTING DEVICE FOR VEHICLE HEADLIGHT
DISPOSITIF D'ÉCLAIRAGE POUR PHARES DE VÉHICULES

(30) Priorität: 25.03.2015 AT 502382015
(43) Veröffentlichungstag der Anmeldung: 31.01.2018
(73) Patentinhaber: ZKW Group GmbH, 3250 Wieselburg (AT)
(72) Erfinder: TAUDT, Lukas, 3250 Wieselburg (AT); TOMASETIG, Stefan, 3251 Purgstall an der Erlauf (AT); FRANK, Heimo, 3435 Zwentendorf (AT)
(74) Vertreter: Patentanwaltskanzlei Matschnig & Forsthuber OG
(86) Internationale Anmeldenummer: PCT/AT2016/050067
(87) Internationale Veröffentlichungsnummer: WO 2016/149721

(56) Entgegenhaltungen:
- EP-A2- 2 517 929
- DE-A1- 19 854 616
- DE-A1-102007 008 994
- DE-A1-102007 052 742
- US-A1- 2009 231 873
- US-A1- 2011 012 510

## Beschreibung

Die Erfindung betrifft eine Beleuchtungsvorrichtung für einen Fahrzeugscheinwerfer, welche ein erstes Lichtmodul, ein zweites Lichtmodul und ein drittes Lichtmodul umfasst, wobei das erste Lichtmodul in einem in ein Fahrzeug eingebauten Zustand in einem Bereich vor dem Kraftfahrzeug eine erste vorgegebene Gesamtlichtverteilung erzeugt, und das zweite Lichtmodul in einem in ein Fahrzeug eingebauten Zustand in einem Bereich vor dem Kraftfahrzeug eine erste vorgegebene Teillichtverteilung erzeugt, und das dritte Lichtmodul in einem in ein Fahrzeug eingebauten Zustand in einem Bereich vor dem Kraftfahrzeug eine zweite vorgegebene Teillichtverteilung erzeugt, und wobei bei gleichzeitig leuchtendem ersten und zweiten Lichtmodul die erste Gesamtlichtverteilung die erste Teillichtverteilung zumindest teilweise überlappt, sodass eine zweite Gesamtlichtverteilung gebildet ist.

Weiters betrifft die Erfindung einen Fahrzeugscheinwerfer mit zumindest einer solchen Beleuchtungsvorrichtung.

Außerdem betrifft die Erfindung ein Kraftfahrzeug mit zumindest einem solchen, vorzugsweise mit zwei solchen Fahrzeugscheinwerfern.

Eine Scheinwerferanlage für Fahrzeuge mit einem Abblendlichtscheinwerfer, einem Fernlichtscheinwerfer und einem Nebelscheinwerfer ist durch die DE19854616 A1 bekannt. Nach den gesetzlichen Bestimmungen haben Lichtverteilungen von Fahrzeugscheinwerfern eine Reihe von Voraussetzungen zu erfüllen. Neben den gesetzlichen Vorgaben müssen auch oft Kundenanforderungen z.B. bezüglich Homogenität einer Lichtverteilung umgesetzt werden.

Zum Beispiel sind aus gesetzlichen Gründen Übergänge von hell ausgeleuchteten zu abgeblendeten Lichtverteilungsbereichen als unscharfe Hell-Dunkel-Grenzen (HD-Grenzen) definiert, wobei die HD-Grenzen weder zu scharf noch zu verwaschen abgebildet werden dürfen, d.h. die maximale Schärfe (der Härtegrad der HD-Grenze ist durch eine Messzahl G bestimmt) der HD-Grenze ist gesetzlich vorgegeben (in ECE - Mitgliedsstaaten sind auch Untergrenzen für diese Maßzahl gesetzlich vorgeschrieben). Eine solche Verwischung der HD-Grenze führt dazu, dass die HD-Grenze vom Fahrer als "weicher" und subjektiv angenehmer empfunden wird.

Die Quantifizierung der Schärfe bzw. Unschärfe dieser HD-Grenze erfolgt durch das Maximum eines Gradienten entlang eines vertikalen Schnitts durch die HD-Grenze. Dazu wird der Logarithmus der Beleuchtungsstärke an Messpunkten in 0,1°-Abständen errechnet und deren Differenz gebildet, wodurch man die Gradientenfunktion erhält. Das Maximum dieser Funktion wird als Gradient der HD-Grenze bezeichnet. Da diese Definition die menschliche Helligkeitswahrnehmung nur ungenau nachbildet, können unterschiedlich wahrgenommene HD-Grenzen denselben gemessenen Gradientenwert aufweisen bzw. bei ähnlich aussehenden HD-Grenzen können unterschiedliche Gradienten gemessen werden.

Ein anderes Thema bildet die Erzeugung von segmentierten Lichtverteilungen. Solche kommen beispielsweise bei der Erzeugung von dynamischen Lichtverteilungen, etwa einem blendfreien Fernlicht, zum Einsatz. In der Fachsprache spricht man oft von sog. ADB - Systemen (Adaptive Driving Beam). Bei speziellen Ausführungsformen wird eine solche dynamische Lichtverteilung aus einer oder mehreren Einzellichtverteilungen aufgebaut. Dazu wird beispielsweise mit einzelnen Lichtquellen, welchen jeweils eine Vorsatzoptik zugeordnet ist, jeweils ein kleines Segment im Lichtbild erzeugt, die Überlagerung dieser Lichtsegmente ergibt dann die gesamte Lichtverteilung. Durch Abschalten einzelner Lichtquellen können dabei einzelne Segmente im Lichtbild abgeschaltet, also nicht beleuchtet werden. Die Segmente sind dabei üblicherweise in Zeilen und/oder Spalten angeordnet.

Die Verwendung unterschiedlicher Lichtmodule zur Erzeugung einer gesetzlich vorgeschriebenen Gesamtlichtverteilung kann dazu führen, dass scharfe, als unangenehm empfundene Übergänge zwischen den von den einzelnen Lichtmodulen erzeugten Lichtverteilungen entstehen. Diese Übergänge oder so genannte Inhomogenitäten machen sich im Vorfeld des Fahrzeugs erkennbar. Folglich, verwendet man eine Lichtverteilung, die sehr große Gradienten im Intensitätsübergang aufweist, so nimmt diese das menschliche Auge sehr deutlich wahr.

Ein dem Stand der Technik bekannter Ansatz um den Gradienten aufzuweichen ist die Anpassung der Krümmung der Vorsatzoptik (siehe z.B. DE 102009053581 B3), soweit es das optische System (Linsendurchmesser, Schnittweite der Linse) zulässt. Dieser Ansatz findet eine Anwendung insbesondere bei den Vorrichtungen, die mit einer Vorsatzoptik versehen sind. Eine solche Anpassung kann z.B. durch die Verwendung von Mikrostrukturen auf den Grenzflächen von Abbildungslinsen erzielt werden und ist aus dem Stand der Technik bekannt.

Mit einer Krümmungsänderung an der Austrittsfläche einer Vorsatzoptik werden die beispielsweise streifenförmigen Lichtverteilungen in der Größe variiert und dadurch ein bestimmter Lichtstromanteil über eine größere Fläche verteilt. Somit kommt es zur Verbreiterung des HD-Bereichs und das menschliche Auge nimmt den Beleuchtungsübergang kontrastärmer wahr. Dieser Ansatz ist allerdings nur begrenzt anwendbar. Z.B. lässt sich der große Gradient am unteren Bereich einer segmentierten Fernlichtverteilung, auf den noch später Bezug genommen wird, auf diese Art und Weise nicht manipulieren.

In einem anderen dem Stand der Technik bekannten Ansatz werden Übergänge homogenisierende Aufrauhungen (z.B. durch Sandstrahlen) an den Vorsatzoptikelementen vorgenommen. Der Vorgang des Sandstrahlens führt immer zu unterschiedlichen Geometrien im Werkzeug oder an der Linsenoberfläche. Dies hat zum Nachteil, dass jede Produktionscharge unterschiedlich aussieht und führt zu (meist) geringen Schwankungen der Gradientenwerte.

Die oben genannten Lösungen können daher nicht generell sondern nur in Spezialfällen angewendet werden (siehe z.B. DE 102006052749 A1, DE 102008036193 A1, EP 2518397 A2, DE 102007052745 A1, DE 102007052742 A1).

Die beschriebenen Nachteile des Stands der Technik sollen ausgeräumt werden. Es ist daher eine Aufgabe dieser Erfindung, eine Beleuchtungsvorrichtung bereit zu stellen, mit der ein Lichtbild realisiert werden kann, das die Gesetzeswerte erfüllt und gleichzeitig nicht als störend empfunden wird.

Damit gesetzeskonforme Lichtstärke-Werte erreicht werden, muss zunächst die Stärke des von der Beleuchtungsvorrichtung abgestrahlten Lichts gemessen werden. Die Messung geschieht üblicherweise, indem in einem bestimmten Abstand vor der Beleuchtungsvorrichtung ein Messschirm senkrecht zu der optischen Achse der Beleuchtungsvorrichtung angeordnet und beleuchtet wird. Auf dem Messschirm wird ein spezielles orthogonales Koordinatenpaar - hh-Linie und vv-Linie - definiert. Die Lage eines Punktes auf dem Messschirm wird in Grad angegeben. Dabei werden die Lichtstärke-Werte in Form einer zweidimensionalen Verteilung aufgenommen und beispielsweise als Isoluxlinien-Diagramm dargestellt (Isoluxlinien). Die Lichtstärkeverlaufskurve stellt einen Schnitt durch die Isoluxverteilung entlang einer bestimmten Kurve dar, wobei die Schnittkurve üblicherweise eine gerade Linie ist, die parallel zur Ordinate (vv-Linie) auf dem Isoluxlinien-Diagramm verläuft. Solche Lichtstärkeverlaufskurven werden beim Vergleich unterschiedlicher Lichtverteilungen herangezogen.

Die oben beschriebene Aufgabe wird mit einer eingangs erwähnten Beleuchtungsvorrichtung erfindungsgemäß dadurch gelöst, dass die erste Gesamtlichtverteilung eine Abblendlichtverteilung ist, die erste Teillichtverteilung eine Teil-Fernlichtverteilung ist, die zweite Gesamtlichtverteilung eine Fernlichtverteilung ist, die zweite Teillichtverteilung vollständig unterhalb der gesetzlich vorgeschriebenen hh-Linie liegt und an zumindest einen horizontalen Abschnitt der Hell-Dunkel-Grenze der Abblendlichtverteilung von unten angrenzt und zumindest teilweise die Fernlichtverteilung überlappt, die Teil-Fernlichtverteilung aus einem oder mehreren Segmenten gebildet ist und eine untere Grenze aufweist, welche untere Grenze zumindest teilweise in der Abblendlichtverteilung liegt und bei gleichzeitig leuchtenden zweiten und dritten Lichtmodulen von der zweiten Teillichtverteilung zumindest teilweise überlappt wird, wobei bei gleichzeitiger Aktivierung aller drei Lichtmodule eine dritte Gesamtlichtverteilung gebildet ist.

Es hat sich als zweckmäßig erwiesen, die Lichtverteilungen durch die einschlägigen Lichtstärkeverlaufskurven zu beschreiben. So ist erfindungsgemäß die zweite Gesamtlichtverteilung durch eine erste entlang einer definierten Schnittkurve aufgenommene Lichtstärkeverlaufskurve charakterisiert.

Dabei ist es zweckdienlich, dass die dritte Gesamtlichtverteilung durch eine zweite entlang der definierten Schnittkurve aufgenommene Lichtstärkeverlaufskurve charakterisiert ist. Gemäß der Erfindung wird somit der Überlapp der ersten Gesamtlichtverteilung mit der ersten Teillichtverteilung mit dem Überlapp der ersten Gesamtlichtverteilung, der ersten Teillichtverteilung und der zweiten Teillichtverteilung verglichen. Dieser Vergleich erfolgt mithilfe von charakteristischen Lichtstärkeverlaufskurven und wird durch Krümmungsradien beider Kurven quantifiziert (die Verwendung der Krümmungsradien als Maß für Quantifizierung wird später erörtert), wobei die erste Lichtstärkeverlaufskurve und die zweite Lichtstärkeverlaufskurve jeweils zumindest zweimal stetig differenzierbar sind.

Es sei an dieser Stelle angemerkt, dass die Lichtstärkeverlaufskurven durch eine Interpolation, beispielsweise eine Spline-Interpolation, entstehen. Bei dieser Interpolation können bestimmte Vorgaben an die Glattheit der Ausgleichskurven (z.B. Ordnung der Spline-Interpolation), kurz Glattheitseigenschaften, vorgegeben werden, die die Lichtstärkeverlaufskurven erfüllen müssen.

Vorzugsweise werden dabei die Lichtstärkekurven entlang einer geradlinigen Schnittkurve aufgenommen.

Es ist außerdem besonders vorteilhaft, dass die geradlinige Schnittkurve parallel zur Ordinate des Isoluxlinien-Diagramms verläuft.

Um die Lichtstärkeverlaufskurven zu vergleichen bedarf es eines entsprechenden Maßes. Es sei an dieser Stelle nochmals darauf hingewiesen, dass das Ziel der gegenständlichen Erfindung darin liegt, die Stärke der Inhomogenitäten der Lichtverteilungen zu reduzieren. Die Stärke einer Inhomogenität spiegelt sich darin wider, wie stark sich die Lichtstärke-Werte innerhalb eines bestimmten Bereichs verändern. In Bezug auf Lichtstärkeverlaufskurven bedeutet dies, wie schnell die Kurve innerhalb eines bestimmten Intervalls ansteigt beziehungsweise abfällt.

Als Maß dieser Intensitätsänderungsrate ist es vorteilhaft das Ausmaß der Veränderung des Krümmungsradius entlang eines Anstiegs- bzw. Gefälle-Bereichs zu wählen. So erscheint ein Anstiegs- bzw. Gefälle-Bereich, bei dem der minimale Krümmungsradius groß ist, "flacher" als ein Anstiegs- bzw. Gefälle-Bereich, bei dem der minimale Krümmungsradius klein ist. Ergo wird im ersten Fall die Lichtverteilung in diesem Bereich als angenehmer empfunden.

Es ist also vorteilhaft, dass der minimale Krümmungsradius in zumindest einem Anstiegsbereich der ersten Lichtstärkeverlaufskurve, in dem die Lichtstärke-Werte monoton steigend sind, vorzugsweise in allen Anstiegsbereichen, kleiner oder gleich als der minimale Krümmungsradius in einem Anstiegsbereich der zweiten Lichtstärkeverlaufskurve, in dem die Lichtstärke-Werte monoton steigend sind, vorzugsweise in allen Anstiegsbereichen, ist.

Darüber hinaus kann es vorgesehen sein, dass der minimale Krümmungsradius in zumindest einem Gefälle-Bereich der ersten Lichtstärkeverlaufskurve, in dem die Lichtstärke-Werte monoton fallend sind, vorzugsweise in allen Gefälle-Bereichen, kleiner oder gleich als der minimale Krümmungsradius in einem Gefälle-Bereich der zweiten Lichtstärkeverlaufskurve, in dem die Lichtstärke-Werte monoton fallend sind, vorzugsweise in allen Gefälle-Bereichen, ist.

Hinsichtlich der Form der zweiten Teilverteilung ist es vorteilhaft, dass das dritte Lichtmodul derart ausgebildet und/oder angeordnet ist, dass es ein horizontal ausgedehntes streifenförmiges Segment ausleuchtet, wobei das Verhältnis von Segmentbreite zu Segmenthöhe mindestens 2 zu 1, vorzugsweise bis zu 10 zu 1, beträgt.

Weiters ist es denkbar, dass das dritte Lichtmodul derart ausgebildet und/oder angeordnet ist, dass es ein horizontal ausgedehntes streifenförmiges Segment ausleuchtet, welches Segment in einem Bereich zwischen etwa -20° und etwa +20° horizontal liegt.

Außerdem ist es mit Vorteil vorgesehen, dass das dritte Lichtmodul derart ausgebildet und/oder angeordnet ist, dass es in einem in ein Fahrzeug eingebauten Zustand, wobei das Fahrzeug für Rechtsverkehr ausgelegt ist, ein horizontal ausgedehntes streifenförmiges Segment ausleuchtet, welches Segment in einem Bereich zwischen etwa -20° und etwa +10° horizontal liegt.

Darüber hinaus kann es vorgesehen sein, dass das dritte Lichtmodul derart ausgebildet und/oder angeordnet ist, dass es in einem in ein Fahrzeug eingebauten Zustand, wobei das Fahrzeug für Linksverkehr ausgelegt ist, ein horizontal ausgedehntes streifenförmiges Segment ausleuchtet, welches Segment in einem Bereich zwischen etwa -10° und etwa +20° horizontal liegt.

Es ist denkbar, dass das dritte Lichtmodul derart ausgebildet und/oder angeordnet ist, dass es auf einem in einem bestimmten Abstand vor der Beleuchtungsvorrichtung senkrecht angeordneten Messschirm ein horizontal ausgedehntes streifenförmiges Segment ausleuchtet, dessen horizontale Ausdehnung in einem Bereich zwischen 20° und 40° liegt, vorzugsweise aber 30° beträgt.

Zusammengefasst leuchtet das dritte Lichtmodul ein horizontal ausgedehntes streifenförmiges Segment in einem Horizontal-Winkel Bereich aus, der im Allgemeinen zwischen -20° und etwa +20° liegt und eine horizontale Ausdehnung zwischen 20° und 40°, vorzugsweise aber 30° aufweist, jedoch dem Straßenverkehrssystem angepasst werden kann, sodass der Horizontal-Winkel Bereich bei den Rechtsverkehr-Fahrzeugen zwischen etwa -20° und etwa +10° und bei den Linksverkehr-Fahrzeugen zwischen etwa -10° und etwa +20° liegt.

Weiters ist es von Vorteil, dass das dritte Lichtmodul derart ausgebildet und/oder angeordnet ist, dass es ein horizontal ausgedehntes streifenförmiges Segment ausleuchtet, welches Segment in einem Bereich zwischen etwa -4,5° und etwa 0° vertikal liegt.

Ebenso kann es vorgesehen sein, dass das dritte Lichtmodul derart ausgebildet und/oder angeordnet ist, dass es ein horizontal ausgedehntes streifenförmiges Segment ausleuchtet, dessen vertikale Ausdehnung in einem Bereich zwischen 0° und 4,5°, vorzugsweise zwischen 3° und 4,5°, liegt.

Somit leuchtet das dritte Lichtmodul ein horizontal ausgedehntes streifenförmiges Segment aus, das in einem Vertikal-Winkel Bereich von etwa 0° bis etwa -4,5° liegt und dessen vertikale Ausdehnung in einem Bereich zwischen 0° und 4,5°, vorzugsweise zwischen 3° und 4,5°, liegt. Dabei wird auf das Segment die Forderung auferlegt, dass es entweder vollständig unter der hh-Linie liegt oder an diese Linie von unten angrenzt.

Für eine gezielte Beleuchtung der oben genannten Bereiche sind unterschiedliche Ausbildungen und Ausführungsformen des dritten Lichtmoduls geeignet.

Dabei hat es sich als zweckmäßig erwiesen, dass das dritte Lichtmodul zumindest eine Lichtquelle und zumindest eine der zumindest einen Lichtquelle zugeordnete Vorsatzoptik und/oder zumindest einen zugeordneten Reflektor umfasst.

Es ist prinzipiell möglich, dass bei einer konkreten Ausführungsform der dem dritten Lichtmodul zugeordnete Reflektor als Freiformreflektor, beispielsweise als Freiformreflektor mit einer Paraboloid-Grundform ausgebildet ist.

Weiters ist es vorteilhaft, dass die im dritten Lichtmodul angeordnete Lichtquelle als eine Lampe, beispielsweise eine dem Standard ECE-R37 entsprechende Glühlampe oder eine dem Standard ECE-R99 entsprechende Gasentladungslampe, ausgebildet ist.

In einer der bevorzugten Ausführungsformen ist vorgesehen, dass die im dritten Lichtmodul angeordnete Lichtquelle aus einer, zwei oder mehreren LEDs gebildet ist.

In einer der bevorzugten Ausführungsformen kann vorgesehen sein, dass die im dritten Lichtmodul angeordnete Lichtquelle als eine Laserlichtquelle ausgebildet ist.

Weiters ist es mit Vorteil vorgesehen, dass die im dritten Lichtmodul angeordnete Lichtquelle Licht in einem vorgegebenen oder vorgebbaren Spektralbereich emittiert.

Dabei ist es zweckdienlich, dass die im dritten Lichtmodul angeordnete Lichtquelle Licht emittiert, dessen Farbe auf die Farbe des vom ersten Lichtmodul und/oder vom zweiten Lichtmodul emittierten Lichts abstimmbar ist.

Bei einer konkreten Ausführungsform der Erfindung ist vorgesehen, dass das erste Lichtmodul, das zweite Lichtmodul und das dritte Lichtmodul in einem Fahrzeugscheinwerfergehäuse angeordnet sind.

Bei einer anderen konkreten Ausführungsform der Erfindung ist vorgesehen, dass das erste Lichtmodul und das zweite Lichtmodul in einem Fahrzeugscheinwerfergehäuse angeordnet sind und das dritte Lichtmodul als ein Zusatz-Lichtmodul ausgebildet und außerhalb des Fahrzeugscheinwerfergehäuses angeordnet ist.

Darüber hinaus ist es denkbar, dass die erste Gesamtlichtverteilung eine Abblendlichtverteilung ist.

Weiters ist mit Vorteil vorgesehen, dass die erste Teillichtverteilung eine Teil-Fernlichtverteilung ist.

Außerdem kann es vorgesehen sein, dass die Segmente rechteckig ausgebildet sind und die untere Grenze geradlinig verläuft.

Die vorliegende Erfindung ist nachfolgend anhand bevorzugter nicht einschränkender Ausführungsbeispiele unter Bezugnahme auf die Abbildungen noch eingehend veranschaulicht.

Es zeigt:
Fig. 1 eine erste Gesamtlichtverteilung,
Fig. 2 eine erste Teillichtverteilung,
Fig. 3 eine zweite Teillichtverteilung,
Fig. 4 eine zweite Gesamtlichtverteilung,
Fig. 5 eine erste entlang einer definierten Schnittkurve aufgenommene Lichtstärkeverlaufskurve,
Fig. 6 eine erfindungsgemäße dritte Gesamtlichtverteilung,
Fig. 7 eine zweite entlang einer definierten Schnittkurve aufgenommene Lichtstärkeverlaufskurve,
Fig. 8 ein Isoluxlinien-Diagramm der zweiten Gesamtlichtverteilung,
Fig. 9 ein Isoluxlinien-Diagramm der dritten Gesamtlichtverteilung,
Fig. 10 einen Vergleich von zwei bei H = 0° aufgenommenen Lichtstärkeverlaufskurven mit leuchtendem erfindungsgemäßem drittem Lichtmodul und ohne leuchtendes erfindungsgemäßes drittes Lichtmoduls,
Fig. 11a ein Gradientenverlauf mit leuchtendem erfindungsgemäßem drittem Lichtmodul,
Fig. 11b einen Gradientenverlauf ohne leuchtendes erfindungsgemäßes drittes Lichtmodul,
Fig. 12 einen Fahrzeugscheinwerfer mit innerhalb eines Gehäuses angeordneten Lichtmodulen, und
Fig. 13 einen Fahrzeugscheinwerfer mit außerhalb eines Gehäuses angeordnetem erfindungsgemäßem drittem Lichtmodul.

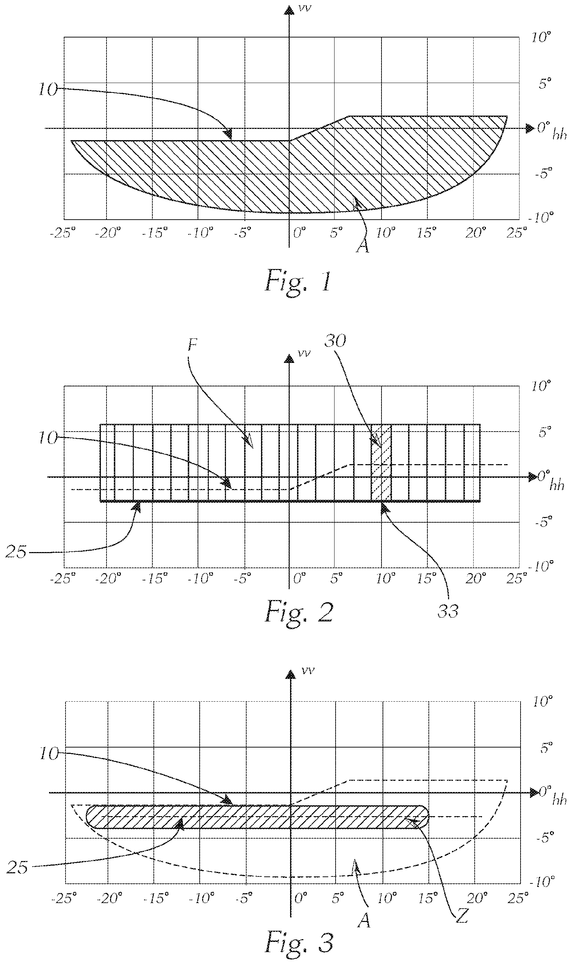

Zunächst wird auf die Fig. 1-3 Bezug genommen, welche drei prinzipielle schematische Lichtverteilungen zeigen.

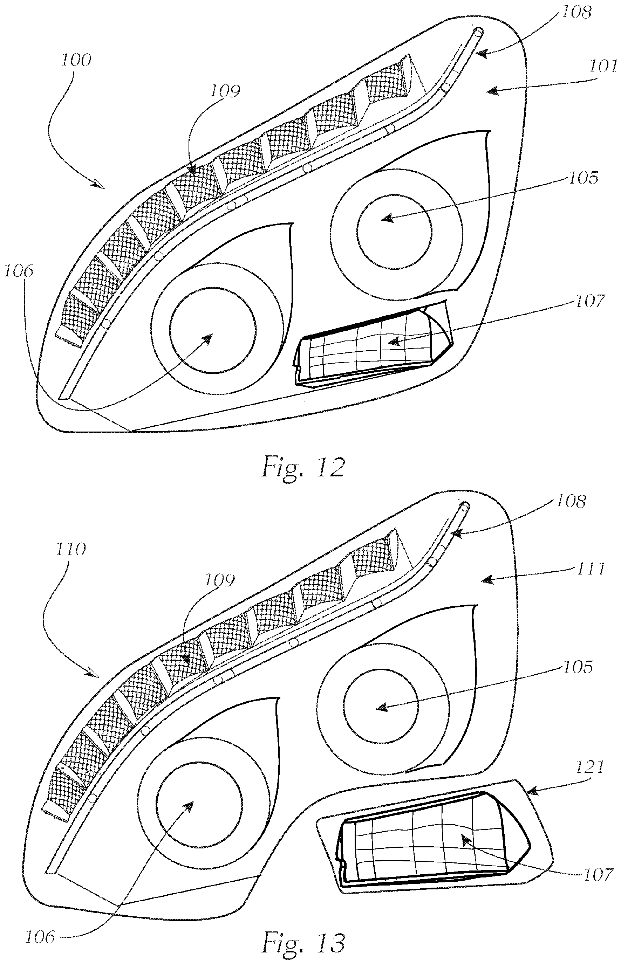

Fig. 1 zeigt schematisch eine erste typische Gesamtlichtverteilung, hier in Form einer Abblendlichtverteilung A, die beispielsweise mit einem in den Fig. 12 und 13 gezeigten bekannten Lichtmodul 105 nach dem Stand der Technik erzeugt wird. Die Abblendlichtverteilung weist eine Hell-Dunkel-Grenze 10 auf, welche im gezeigten Fall eine für die Anwendung des Abblendlichtmoduls in Rechtsverkehr-Ländern typische Asymmetrie aufweist.

Fig. 2 zeigt schematisch eine segmentierte Teillichtverteilung - die Teil-Fernlichtverteilung F, die aus rechteckigen in vertikaler Richtung ausgedehnten Segmenten 30 gebildet ist und eine untere Grenze 25 aufweist, an welcher die Lichtstärke dieser Teil-Fernlichtverteilung einen starken Gradienten aufweist. Eine solche Teillichtverteilung kann beispielsweise mit einem in den Fig. 12 und 13 gezeigten bekannten Lichtmodul 106 nach dem Stand der Technik erzeugt werden.

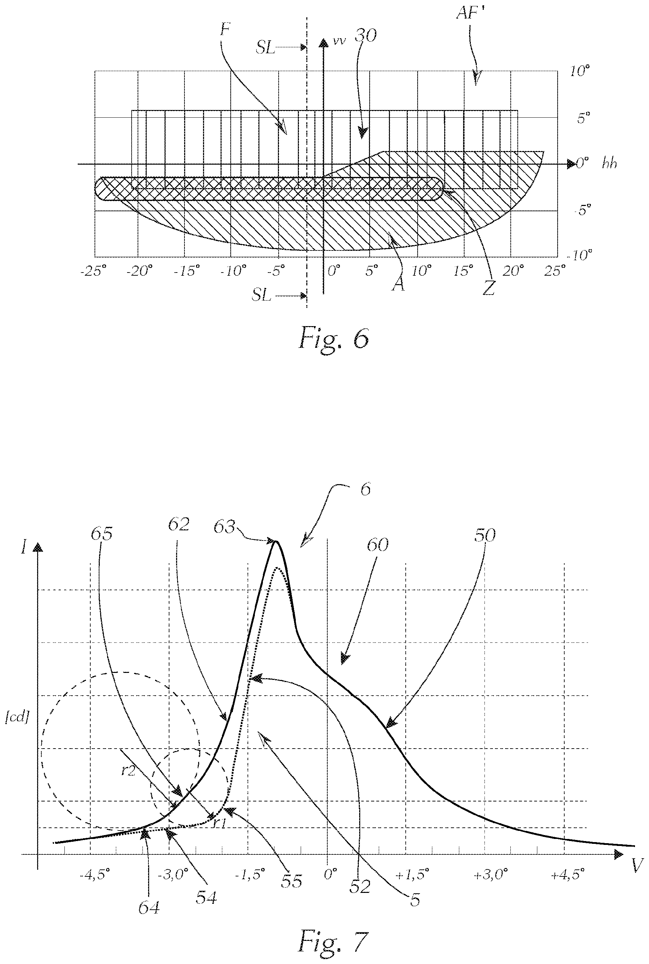

Fig. 3 zeigt schematisch eine Teillichtverteilung Z, die vollständig unterhalb der hh-Linie liegt und die Abblendlichtverteilung A überlagert. Die Teillichtverteilung Z überlappt teilweise die untere Kante 25 der Teil-Fernlichtverteilung F, wie dies in Fig. 6 gezeigt ist.

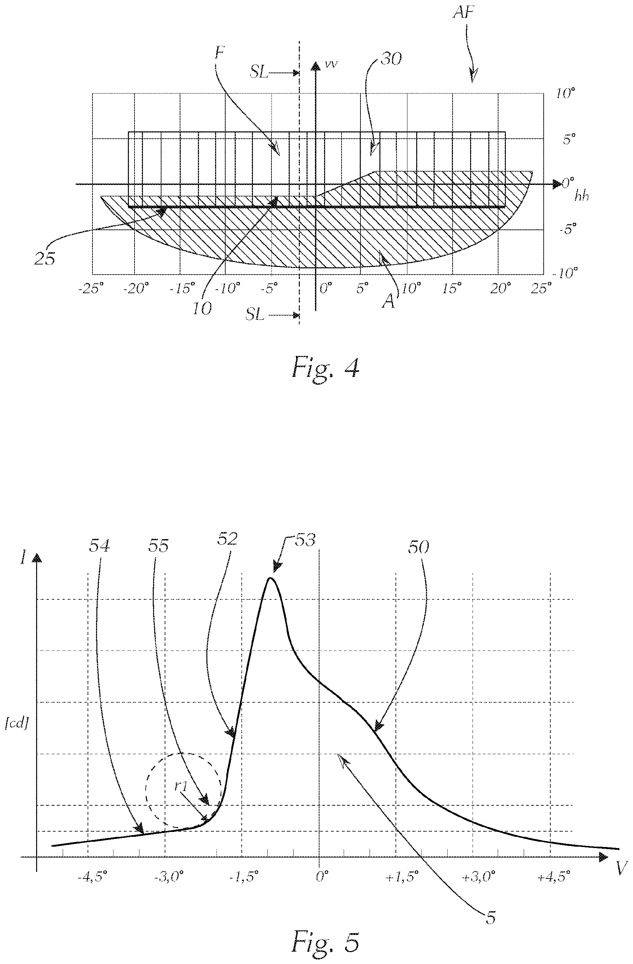

Fig. 4 zeigt schematisch eine zweite typische Gesamtlichtverteilung AF, bei der es sich hier um eine Fernlichtverteilung handelt, die durch gleichzeitiges Leuchten der auf den Fig. 12 und 13 gezeigten Lichtmodule 105, 106 erzeugt wird und sich als Überlagerung von der Abblendlichtverteilung A mit der Teil-Fernlichtverteilung F ergibt. Weiters zeigt Fig. 4 eine Schnittlinie SL, die parallel zur Ordinate (vv-Linie) vv verläuft und die Abszisse (hh-Linie) hh bei etwa -2,5° schneidet.

Fig. 5 zeigt eine Lichtstärkeverlaufskurve 5, die die zweite unmodifizierte Gesamtlichtverteilung AF charakterisiert und entlang der Schnittkurve SL aufgenommen wurde. Die Lichtstärkeverlaufskurve 5 stellt eine Abhängigkeit der Lichtstärke-Werte in Candela [cd] bei gleichzeitig leuchtendem Abblendlichtmodul 105 und Fernlichtmodul 106 von einem Parameter dar, der durch die Wahl der Schnittkurve SL festgelegt wird. Da die Schnittkurve SL in Fig. 4 parallel zur vv-Linie verläuft, ist der Parameter in Fig. 5 gleich dem auf der vv-Linie in Grad aufgetragenen Winkel. Die Lichtstärkeverlaufskurve 5 weist in diesem Beispiel der Gesamtlichtverteilung AF einen Anstiegsbereich, der aus einem flachen Teil 54, einem steilen Teil 52 und einem Übergangsbereich 55 besteht, sowie ein Maximum 53 und einen Gefälle-Bereich 50 auf. Der erste flache Anstiegsbereich 54 zeichnet sich durch einen schwachen Gradienten aus, wobei der zweite steile Anstiegsbereich 52 einen starken Gradienten aufweist. Die Form des Übergangsbereichs 55 spiegelt wider, wie stark sich die Gradientenfunktion (nicht dargestellt) in diesem Bereich verändert. Als Maß dieser Veränderung dient der Krümmungsradius r1 entlang des Übergangsbereichs 55.

Fig. 6 zeigt schematisch eine dritte erfindungsgemäße Gesamtlichtverteilung AF', die durch gleichzeitiges Leuchten der auf den Fig. 12 und 13 gezeigten Lichtmodule 105, 106 und 107 erzeugt wird und sich als Überlagerung der Abblendlichtverteilung A, der segmentierten Teil-Fernlichtverteilung F und der erfindungsgemäßen zweiten Teillichtverteilung Z ergibt. Weiters zeigt Fig. 6 eine Schnittlinie SL, die parallel zur vv-Linie verläuft und die Abszisse (hh-Linie) beispielsweise bei etwa H=-2,5° schneidet. Die Anordnung der erfindungsgemäßen zweiten Teillichtverteilung Z in Fig. 6 unterscheidet sich von ihrer Anordnung in Fig. 3. Zum einen ist es durchaus denkbar, dass die erfindungsgemäße Teillichtverteilung Z nicht in der Abblendlichtverteilung enthalten ist, sondern diese teilweise überlappt. Zum anderen kann die Teillichtverteilung Z bei einer bevorzugten Ausführungsform der Erfindung an die hh-Linie von unten angrenzen.

Fig. 7 zeigt zwei gleichzeitig aufgetragene Lichtstärkeverlaufskurven 5, 6. Die erste Lichtstärkeverlaufskurve 5 wurde bereits in der Beschreibung von Fig. 5 thematisiert und ist hier zur Veranschaulichung der Unterschiede zwischen der unmodifizierten (zweiten) Gesamtlichtverteilung AF und der modifizierten (dritten) Gesamtlichtverteilung AF' gestrichelt aufgetragen. Die zweite Lichtstärkeverlaufskurve 6 (durchgezogene Linie) charakterisiert die dritte modifizierte Gesamtlichtverteilung AF' und wurde entlang der Schnittkurve SL aufgenommen. Die zweite Lichtstärkeverlaufskurve 6 stellt eine Abhängigkeit der Lichtstärke-Werte in Candela [cd] bei gleichzeitig leuchtendem Abblendlichtmodul 105, Fernlichtmodul 106 und erfindungsgemäßem Zusatzlichtmodul 107 von einem Parameter dar, der durch die Wahl der Schnittkurve SL festgelegt wird. Da die Schnittkurve SL in Fig. 6 parallel zur vv-Linie verläuft, ist der Parameter in Fig. 7 gleich dem auf der vv-Linie in Grad aufgetragenen Winkel. Die zweite Lichtstärkeverlaufskurve 6 weist in diesem Beispiel der Gesamtlichtverteilung AF' einen Anstiegsbereich, der aus einem flachen Teil 64, einem steilen Teil 62 und einem Übergangsbereich 65 besteht, sowie ein Maximum 63 und einen Gefälle-Bereich 60 auf, wobei der Gefälle-Bereich 60 der zweiten Lichtstärkeverlaufskurve 6 mit dem Gefälle-Bereich 50 der ersten Lichtstärkeverlaufskurve 5 beinah vollständig übereinstimmt. Auch hier stellt der Krümmungsradius r2 entlang des Übergangsbereichs 65 ein Maß der Veränderung der Gradientenfunktion der dritten Gesamtlichtverteilung AF' dar. Da der Übergangsbereich 65 der zweiten Lichtstärkeverlaufskurve 6 weniger gekrümmt ist als der Übergangsbereich 55 der ersten Lichtstärkeverlaufskurve 5, ist der Minimalwert des Krümmungsradius r2 entlang des Übergangsbereichs 65 größer als der Minimalwert des Krümmungsradius r1 entlang des Übergangsbereichs 55. Dies zeugt dafür, dass der Übergang 65 "weicher" als der Übergang 55 und für den Fahrer subjektiv angenehmer ist.

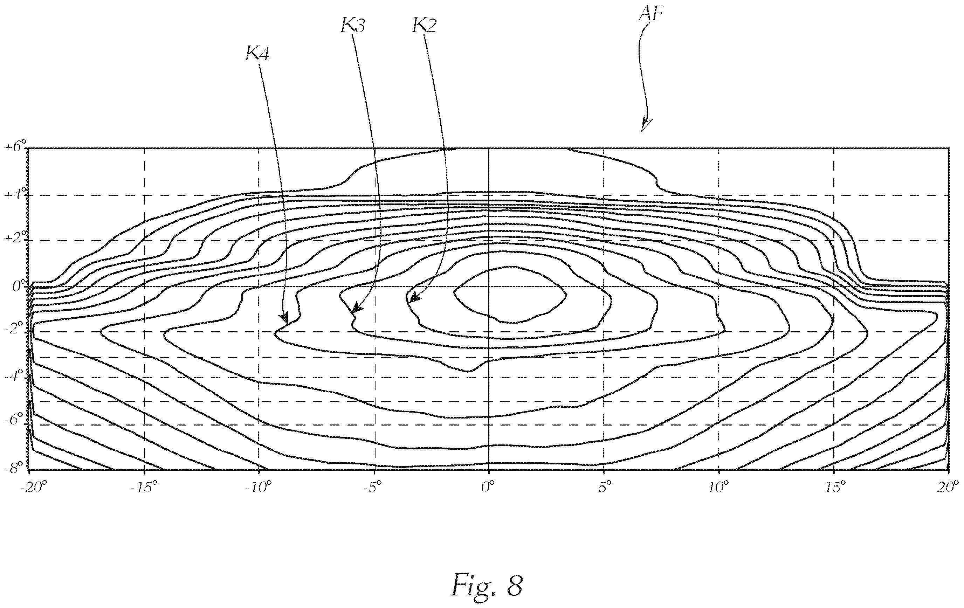

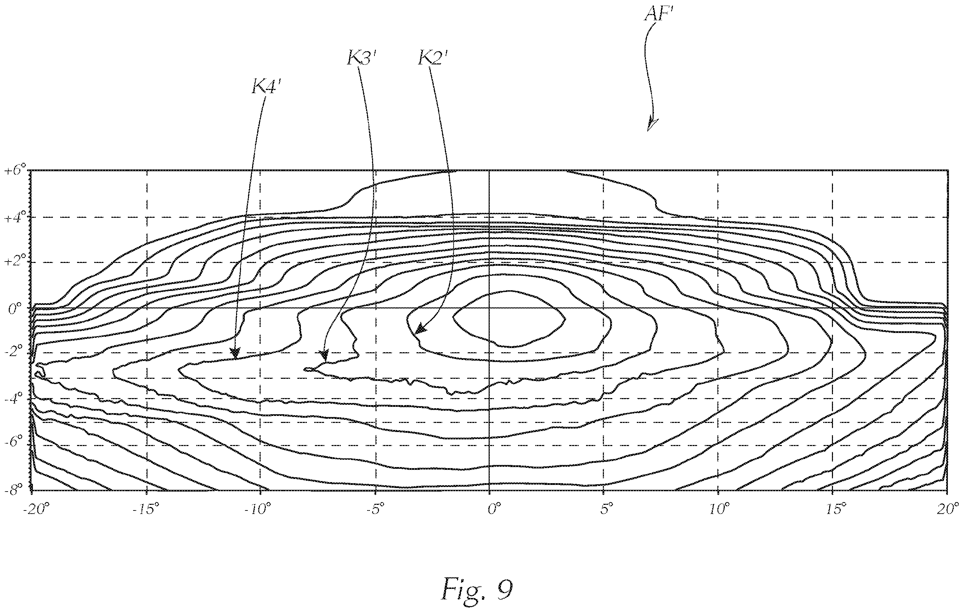

Auf Fig. 8 und 9 werden die oben erörterten Unterschiede zwischen der typischen unmodifizierten zweiten Gesamtlichtverteilung AF und der erfindungsgemäß modifizierten dritten Gesamtlichtverteilung AF' verdeutlicht. Beide Figuren stellen ein Isoluxlinien-Diagramm dar, das einer entsprechenden auf einem senkrecht zu der optischen Achse der Lichtmodule in einem bestimmten Abstand aufgestellten Messschirm aufgenommenen Lichtverteilung entspricht. Jede Kontur - genannt Isoluxlinie - beschreibt eine Menge von Punkten, in denen die Lichtstärke einen bestimmten aber für alle Punkte dieser Menge gleichen Lichtstärke-Wert annimmt. Der entlang eines bestimmten Schnittes gemessene Abstand zwischen den Konturen beschreibt, wie stark sich der Gradient entlang dieses Schnittes verändert. Der in der Fig. 8 entlang der vertikalen Linie H=0° (vv-Linie) gemessene Abstand zwischen der zweiten K2 und der dritten K3 sowie zwischen der dritten K3 und der vierten K4 Kontur ist sichtlich kleiner als der in der Fig. 9 entlang der vertikalen Linie H=0° (vv-Linie) gemessene Abstand zwischen der zweiten K2'und der dritten K3' sowie zwischen der dritten K3' und der vierten K4' Kontur, und spiegelt die Verringerung des Gradienten wider. Aus diesem Grund wird die mit dem erfindungsgemäßen dritten Lichtmodul erzeugte Gesamtlichtverteilung AF' vom Fahrer angenehmer als die typische Gesamtlichtverteilung AF empfunden.

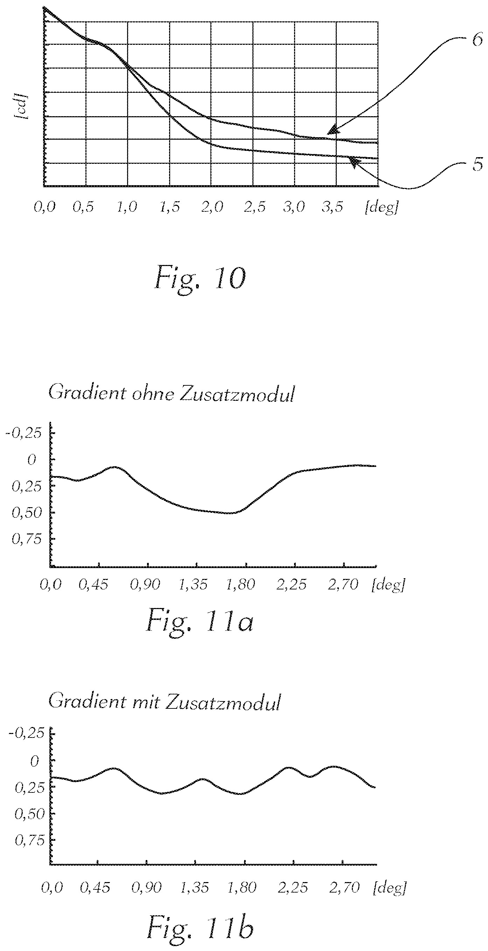

Die entsprechenden Lichtstärkeverlaufskurven 5, 6 sowie die dazugehörigen Gradientenfunktionen sind in Fig. 10 sowie Fig. 11a und 11b dargestellt. Der Betrag des Minimalwerts des Gradienten in Fig. 11a liegt bei etwa 0,5 und ist größer als der Betrag des Minimalwerts des Gradienten in Fig. 11b, der bei etwa 0,25 liegt.

Um die zweite erfindungsgemäße Teillichtverteilung zu erzeugen sind verschiedene Anordnungen und Ausbildungen des dritten Lichtmoduls 107 denkbar. Vorzugsweise ist dem dritten Lichtmodul 107 ein Reflektor zugeordnet, wie es in Fig. 12 und Fig. 13 dargestellt ist. Es ist vorteilhaft das dritte Lichtmodul 107 mit dem ersten Lichtmodul 105 und mit dem zweiten Lichtmodul 106 in einem Fahrzeugscheinwerfergehäuse 101, wie in Fig. 12 dargestellt ist, anzuordnen. Allerdings könnte diese Gesamtanordnung je nach der Abmessung der einzelnen Lichtmodule die ECE-Vorschriften verletzen. Daher ist es durchaus denkbar, das dritte Lichtmodul 107 außerhalb des Fahrzeugscheinwerfergehäuses anzuordnen. Diese Anordnung ist in Fig. 13 dargestellt.

Die Erfindung wurde anhand einer segmentierten Teil-Fernlichtverteilung beschrieben, für welche die Erfindung besonders vorteilhaft ist, weil eine segmentierte Teil-Lichtverteilung eine untere Kante 25 aufweist, an der die Gesamt-Fernlichtverteilung einen besonders starken Gradienten hat.

Prinzipiell ist die Erfindung aber auch im Zusammenhang mit nicht-segmentierten Teil-Fernlichtverteilungen einsetzbar.

## Patentansprüche

1. Beleuchtungsvorrichtung für einen Fahrzeugscheinwerfer, welche umfasst:
- ein erstes Lichtmodul (105),
- ein zweites Lichtmodul (106),
- ein drittes Lichtmodul (107), wobei
- das erste Lichtmodul (105) in einem in ein Fahrzeug eingebauten Zustand in einem Bereich vor dem Kraftfahrzeug eine erste vorgegebene Gesamtlichtverteilung (A) erzeugt, und
- das zweite Lichtmodul (106) in einem in ein Fahrzeug eingebauten Zustand in einem Bereich vor dem Kraftfahrzeug eine erste vorgegebene Teillichtverteilung (F) erzeugt, und
- das dritte Lichtmodul (107) in einem in ein Fahrzeug eingebauten Zustand in einem Bereich vor dem Kraftfahrzeug eine zweite vorgegebene Teillichtverteilung (Z) erzeugt, und wobei
- bei gleichzeitig leuchtendem ersten und zweiten Lichtmodul (105,106) die erste Gesamtlichtverteilung (A) die erste Teillichtverteilung (F) zumindest teilweise überlappt, sodass eine zweite Gesamtlichtverteilung (AF) gebildet ist,
**dadurch gekennzeichnet, dass**
die erste Gesamtlichtverteilung eine Abblendlichtverteilung (A) ist,
die erste Teillichtverteilung eine Teil-Fernlichtverteilung (F) ist,
die zweite Gesamtlichtverteilung eine Fernlichtverteilung (AF) ist,
die zweite Teillichtverteilung (Z) vollständig unterhalb der hh-Linie (hh) liegt und an zumindest einen horizontalen Abschnitt der Hell-Dunkel-Grenze (10) der Abblendlichtverteilung (A) von unten angrenzt und zumindest teilweise die Fernlichtverteilung (AF) überlappt, und die Teil-Fernlichtverteilung (F) aus einem oder mehreren Segmenten (30) gebildet ist und eine untere Grenze (25) aufweist, welche untere Grenze (25) zumindest teilweise in der Abblendlichtverteilung (A) liegt und bei gleichzeitig leuchtenden zweiten und dritten Lichtmodulen von der zweiten Teillichtverteilung (Z) zumindest teilweise überlappt wird,
wobei bei gleichzeitiger Aktivierung aller drei Lichtmodule (105,106,107) eine dritte Gesamtlichtverteilung (AF') gebildet ist.

2. Beleuchtungsvorrichtung nach Anspruch 1, **dadurch gekennzeichnet, dass** die zweite Gesamtlichtverteilung (AF) durch eine erste entlang einer definierten Schnittkurve (SL), die vorzugsweise als eine, beispielsweise parallel zur vv-Linie (vv) verlaufende, Gerade ausgebildet ist, aufgenommene Lichtstärkeverlaufskurve (5) charakterisiert ist, wobei vorzugsweise die dritte Gesamtlichtverteilung (AF') durch eine zweite entlang der definierten Schnittkurve (SL) aufgenommene Lichtstärkeverlaufskurve (6) charakterisiert ist, wobei insbesondere die erste Lichtstärkeverlaufskurve (5) und die zweite Lichtstärkeverlaufskurve (6) jeweils zumindest zweimal stetig differenzierbar sind.

3. Beleuchtungsvorrichtung nach Anspruch 2, **dadurch gekennzeichnet, dass** der minimale Krümmungsradius (r1) in zumindest einem Anstiegsbereich (52, 54) der ersten Lichtstärkeverlaufskurve (5), in dem die Lichtstärke-Werte monoton steigend sind, vorzugsweise in allen Anstiegsbereichen, kleiner oder gleich als der minimale Krümmungsradius (r2) in einem Anstiegsbereich (62, 64) der zweiten Lichtstärkeverlaufskurve (6), in dem die Lichtstärke-Werte monoton steigend sind, vorzugsweise in allen Anstiegsbereichen, ist.

4. Beleuchtungsvorrichtung nach Anspruch 2 oder 3, **dadurch gekennzeichnet, dass** der minimale Krümmungsradius in zumindest einem Gefälle-Bereich (50) der ersten Lichtstärkeverlaufskurve (5), in dem die Lichtstärke-Werte monoton fallend sind, vorzugsweise in allen Gefälle-Bereichen, kleiner oder gleich als der minimale Krümmungsradius in einem Gefälle-Bereich (60) der zweiten Lichtstärkeverlaufskurve (6), in dem die Lichtstärke-Werte monoton fallend sind, vorzugsweise in allen Gefälle-Bereichen, ist.

5. Beleuchtungsvorrichtung nach einem der Ansprüchen 1 bis 4, **dadurch gekennzeichnet, dass** das dritte Lichtmodul (107) derart ausgebildet und/oder angeordnet ist, dass es ein horizontal ausgedehntes streifenförmiges Segment (Z) ausleuchtet, wobei das Verhältnis von Segmentbreite zu Segmenthöhe mindestens 2 zu 1, vorzugsweise bis zu 10 zu 1, beträgt.

6. Beleuchtungsvorrichtung nach einem der Ansprüche 1 bis 5, **dadurch gekennzeichnet, dass** das dritte Lichtmodul (107) derart ausgebildet und/oder angeordnet ist, dass es ein horizontal ausgedehntes streifenförmiges Segment (Z) ausleuchtet, welches Segment in einem Bereich zwischen etwa -20° und etwa +20° horizontal liegt.

7. Beleuchtungsvorrichtung nach einem der Ansprüche 1 bis 6, **dadurch gekennzeichnet, dass** das dritte Lichtmodul (107) derart ausgebildet und/oder angeordnet ist, dass es ein horizontal ausgedehntes streifenförmiges Segment ausleuchtet, welches Segment in einem Bereich zwischen etwa -4,5° und etwa 0° vertikal liegt und/oder dessen vertikale Ausdehnung in einem Bereich zwischen 0° und 4,5°, vorzugsweise zwischen 3° und 4,5°, liegt.

8. Beleuchtungsvorrichtung nach einem der Ansprüche 1 bis 7, **dadurch gekennzeichnet, dass** das dritte Lichtmodul (107) zumindest eine Lichtquelle und zumindest eine der zumindest einen Lichtquelle zugeordnete Vorsatzoptik und/oder zumindest einen zugeordneten Reflektor umfasst.

9. Beleuchtungsvorrichtung nach einem der Ansprüche 1 bis 8, **dadurch gekennzeichnet, dass** der dem dritten Lichtmodul (107) zugeordnete Reflektor als Freiformreflektor, beispielsweise als Freiformreflektor mit einer Paraboloid-Grundform ausgebildet ist.

10. Beleuchtungsvorrichtung nach einem der Ansprüche 1 bis 9, **dadurch gekennzeichnet, dass** die im dritten Lichtmodul (107) angeordnete Lichtquelle Licht emittiert, dessen Farbe auf die Farbe des vom ersten Lichtmodul (105) und/oder vom zweiten Lichtmodul (106) emittierten Lichts abstimmbar ist.

11. Beleuchtungsvorrichtung nach einem der Ansprüche 1 bis 10, **dadurch gekennzeichnet, dass** das erste Lichtmodul (105), das zweite Lichtmodul (106) und das dritte Lichtmodul (107) in einem Fahrzeugscheinwerfergehäuse (101) angeordnet sind.

12. Beleuchtungsvorrichtung nach einem der Ansprüche 1 bis 10, **dadurch gekennzeichnet, dass** das erste Lichtmodul (105) und das zweite Lichtmodul (106) in einem Fahrzeugscheinwerfergehäuse (101) angeordnet sind und das dritte Lichtmodul (107) als ein Zusatz-Lichtmodul (121) ausgebildet und außerhalb des Fahrzeugscheinwerfergehäuses (101) angeordnet ist.

13. Beleuchtungsvorrichtung nach einem der Ansprüche 1 bis 12, **dadurch gekennzeichnet, dass** die Segmente (30) rechteckig ausgebildet sind und die untere Grenze (25) geradlinig verläuft.

14. Fahrzeugscheinwerfer mit zumindest einer Beleuchtungsvorrichtung nach einem der Ansprüche 1 bis 13.

15. Kraftfahrzeug mit zumindest einem, vorzugsweise mit zwei Fahrzeugscheinwerfern nach Anspruch 14.

## Claims

1. A lighting apparatus for a vehicle headlamp comprising:
- a first lighting module (105),
- a second lighting module (106), and
- a third lighting module (107), wherein
- the first lighting module (105) generates a first defined total light distribution (A) in a region in front of a motor vehicle when installed in the vehicle, and
- the second lighting module (106) generates a first defined partial light distribution (F) in a region in front of a motor vehicle when installed in the vehicle, and
- the third lighting module (107) generates a second defined partial light distribution (Z) in a region in front of a motor vehicle when installed in the vehicle, and wherein
- the first total light distribution (A) at least partially overlaps the first partial light distribution (F) when the first and second lighting modules (105, 106) emit light simultaneously, such that a second total light distribution (AF) is formed,
**characterized in that**
the first total light distribution is a low-beam light distribution (A),
the first partial light distribution is a partial high-beam light distribution (F),
the second total light distribution is a high-beam light distribution (AF),
the second partial light distribution (Z) lies entirely below the h-h line (hh) and abuts at least one horizontal section of the light-dark boundary (10) of the low-beam light distribution (A) from below and at least partially overlaps the high-beam light distribution (AF), and that the partial high-beam light distribution (F) is formed from one or a plurality of segments (30) and has a lower boundary (25), which lower boundary (25) at least partially lies within the low-beam light distribution (A) and is at least partially overlapped by the second partial light distribution (Z) when the second and third lighting modules emit light simultaneously,
wherein a third total light distribution (AF') is formed when all three lighting modules (105, 106, 107) are activated simultaneously.

2. The lighting apparatus according to Claim 1, **characterized in that** the second total light distribution (AF) is **characterized by** a first light intensity progression curve (5) which is captured along a defined intersection curve (SL) which preferably is in the shape of a straight line extending, for example, parallel to the v-v line (vv), wherein the third total light distribution (AF') preferably is **characterized by** a second light intensity progression curve (6) which is captured along the defined intersection curve (SL), wherein in particular the first light intensity progression curve (5) and the second light intensity progression curve (6) respectively are at least twice continuously differentiable.

3. The lighting apparatus according to Claim 2, **characterized in that** the minimal radius of curvature (r1) in at least one upward sloping portion (52, 54) of the first light intensity progression curve (5), in which the light intensity values are monotonically increasing, preferably in all upward sloping portions, are smaller than or equal to the minimal radius of curvature (r2) in an upward sloping portion (62, 64) of the second light intensity progression curve (6), in which the light intensity values are monotonically increasing, preferably in all upward sloping portions.

4. The lighting apparatus according to Claim 2 or 3, **characterized in that** the minimal radius of curvature in at least one downward sloping portion (50) of the first light intensity progression curve (5), in which the light intensity values are monotonically decreasing, preferably in all downward sloping portions, are smaller than or equal to the minimal radius of curvature in a downward sloping portion (60) of the second light intensity progression curve (6), in which the light intensity values are monotonically decreasing, preferably in all downward sloping portions.

5. The lighting apparatus according to any one of Claims 1 to 4, **characterized in that** the third lighting module (107) is designed and/or arranged such that it illuminates a horizontally extending, strip-shaped segment (Z), wherein the ratio of segment width to segment height is at least 2 to 1, preferably up to 10 to 1.

6. The lighting apparatus according to any one of Claims 1 to 5, **characterized in that** the third lighting module (107) is designed and/or arranged such that it illuminates a horizontally extending, strip-shaped segment (Z), said segment being located in an area between about -20° and about +20° in the horizontal plane.

7. The lighting apparatus according to any one of Claims 1 to 6, **characterized in that** the third lighting module (107) is designed and/or arranged such that it illuminates a horizontally extending, strip-shaped segment, said segment being located in an area between about -4.5° and about 0° in the vertical plane and/or having a vertical expansion in an area between 0° to 4.5°, preferably between 3° and 4.5°.

8. The lighting apparatus according to any one of Claims 1 to 7, **characterized in that** the third lighting module (107) comprises at least one light source and at least one optical system associated with the light source and/or at least one associated reflector.

9. The lighting apparatus according to any one of Claims 1 to 8, **characterized in that** the reflector associated with the third lighting module (107) is designed as a free-form reflector, for example as a free-form reflector with the basic form of a paraboloid.

10. The lighting apparatus according to any one of Claims 1 to 9, **characterized in that** the light source arranged in the third lighting module (107) emits light which can be adjusted in its colour to correspond to the colour emitted by the first lighting module (105) and/or by the second lighting module (106).

11. The lighting apparatus according to any one of Claims 1 to 10, **characterized in that** the first lighting module (105), the second lighting module (106) and the third lighting module (107) are arranged inside a motor vehicle headlamp housing (101) .

12. The lighting apparatus according to any one of Claims 1 to 10, **characterized in that** the first lighting module (105) and the second lighting module (106) are arranged inside a motor vehicle headlamp housing (101), and the third lighting module (107) is designed as a supplementary lighting module (121) and is arranged outside of the motor vehicle headlamp housing (101).

13. The lighting apparatus according to any one of Claims 1 to 12, **characterized in that** the segments (30) have rectangular shapes and the lower boundary (25) extends in a straight line.

14. A vehicle headlamp having at least one lighting apparatus according to any one of Claims 1 to 13.

15. A motor vehicle having at least one, preferably two vehicle headlamps according to Claim 14.

## Revendications

1. Dispositif d'éclairage pour un phare de véhicule, lequel comprend :
- un premier module d'éclairage (105),
- un deuxième module d'éclairage (106),
- un troisième module d'éclairage (107), sachant que
- le premier module d'éclairage (105) produit une première répartition totale de lumière (A) prédéfinie dans un état monté dans un véhicule dans une zone devant le véhicule automobile, et
- le deuxième module d'éclairage (106) produit une première répartition de lumière partielle (F) prédéfinie dans un état monté dans un véhicule dans une zone devant le véhicule automobile, et
- le troisième module d'éclairage (107) produit une deuxième répartition de lumière partielle (Z) prédéfinie dans un état monté dans un véhicule dans une zone devant le véhicule automobile, et sachant que
- avec le premier et le deuxième module d'éclairage (105, 106) éclairant simultanément, la première répartition totale de lumière (A) chevauche au moins en partie la première répartition partielle de lumière (F) de telle sorte qu'une deuxième répartition totale de lumière (AF) est formée,
**caractérisé en ce que**
la première répartition totale de lumière est une répartition des feux de croisement (A),
la première répartition partielle de lumière est une répartition partielle de feux de route (F),
la deuxième répartition totale de lumière est une répartition de feux de route (AF),
la deuxième répartition partielle de lumière (Z) se situe en dessous de la ligne hh (hh) et est au moins voisine par en dessous d'une section horizontale de la limite clair-obscur (10) de la répartition des feux de croisement (A) et chevauche au moins en partie la répartition des feux de route (AF), et
la répartition partielle de feux de route (F) est formée d'un ou plusieurs segments (30), et comporte une limite inférieure (25), laquelle limite inférieure (25) se situe au moins en partie dans la répartition des feux de croisement (A), et est chevauchée au moins en partie par la deuxième répartition partielle de lumière (Z) avec le deuxième et troisième module d'éclairage éclairant simultanément,
sachant qu'en cas d'activation simultanée de tous les trois modules d'éclairage (105, 106, 107), une troisième répartition totale de lumière (AF') est formée.

2. Dispositif d'éclairage selon la revendication 1, **caractérisé en ce que** la deuxième répartition totale de lumière (AF) est **caractérisée par** une première courbe de profil d'intensité de lumière (5) établie, le long d'une courbe d'intersection définie (SL), qui est constituée de préférence comme une droite passant par exemple parallèlement à la ligne vv (vv), sachant que de préférence la troisième répartition totale de lumière (AF') est **caractérisée par** une deuxième courbe d'intensité de lumière (6) établie le long de la courbe d'intersection (SL) définie, sachant en particulier que la première courbe de profil d'intensité de lumière (5) et la deuxième courbe de profil d'intensité de lumière (6) peuvent être différenciées respectivement en continu au moins deux fois.

3. Dispositif d'éclairage selon la revendication 2, **caractérisé en ce que** le rayon de courbure minimal (r1) dans au moins une zone ascendante (52, 54) de la première courbe de profil d'intensité de lumière (5) dans laquelle les valeurs d'intensité de lumière sont croissantes de façon monotone, est, de préférence dans toutes les zones ascendantes, plus faible que le rayon de courbure minimal (r2) ou identique dans une zone ascendante (62, 64) de la deuxième courbe de profil d'intensité de lumière (6), dans laquelle les valeurs d'intensité de lumière sont ascendantes de façon monotone, de préférence dans toutes les zones ascendantes.

4. Dispositif d'éclairage selon la revendication 2 ou 3, **caractérisé en ce que** le rayon de courbure minimal dans au moins une zone descendante (50) de la première courbe de profil d'intensité de lumière (5) dans laquelle les valeurs d'intensité de lumière sont décroissantes de façon monotone, est, de préférence dans toutes les zones décroissantes, plus faible que le rayon de courbure minimal ou identique dans une zone décroissante (60) de la deuxième courbe de profil d'intensité de lumière (6), dans laquelle les valeurs d'intensité de lumière sont décroissantes de façon monotone, de préférence dans toutes les zones décroissantes.

5. Dispositif d'éclairage selon l'une quelconque des revendications 1 à 4, **caractérisé en ce que** le troisième module d'éclairage (107) est constitué et/ou disposé de telle sorte qu'il éclaire un segment (Z) en forme de bande, étendu de façon horizontale, sachant que le rapport entre la largeur de segment et la hauteur de segment est au moins de 2 à 1, de préférence jusqu'à 10 à 1.

6. Dispositif d'éclairage selon l'une quelconque des revendications 1 à 5, **caractérisé en ce que** le troisième module d'éclairage (107) est constitué et/ou disposé de telle sorte qu'il éclaire un segment (Z) en forme de bande, étendu de façon horizontale, lequel segment se situe dans une plage variant entre environ -20° et environ +20°.

7. Dispositif d'éclairage selon l'une quelconque des revendications 1 à 6, **caractérisé en ce que** le troisième module d'éclairage (107) est constitué et/ou disposé de telle sorte qu'il éclaire un segment en forme de bande étendu de façon horizontale, lequel segment se situe verticalement dans une plage variant entre environ -4,5° et environ 0° et/ou l'extension verticale de celui-ci se situe horizontalement dans une plage variant entre 0° et 4,5°, de préférence entre 3° et 4,5°.

8. Dispositif d'éclairage selon l'une quelconque des revendications 1 à 7, **caractérisé en ce que** le troisième module d'éclairage (107) comprend au moins une source de lumière et au moins une optique additionnelle attribuée à au moins une source de lumière et/ou au moins un réflecteur attribué.

9. Dispositif d'éclairage selon l'une quelconque des revendications 1 à 8, **caractérisé en ce que** le réflecteur attribué au troisième module d'éclairage (107) est constitué comme réflecteur à forme libre, par exemple comme réflecteur à forme libre avec une forme de base paraboloïde.

10. Dispositif d'éclairage selon l'une quelconque des revendications 1 à 9, **caractérisé en ce que** la source de lumière disposée dans le troisième module d'éclairage (107) émet de la lumière dont la couleur peut être harmonisée à la couleur de la lumière émise par le premier module d'éclairage (105) et/ou par le deuxième module d'éclairage (106).

11. Dispositif d'éclairage selon l'une quelconque des revendications 1 à 10, **caractérisé en ce que** le premier module d'éclairage (105), le deuxième module d'éclairage (106) et le troisième module d'éclairage (107) sont disposés dans un boîtier de phare de véhicule (101).

12. Dispositif d'éclairage selon l'une quelconque des revendications 1 à 10, **caractérisé en ce que** le premier module d'éclairage (105) et le deuxième module d'éclairage (106) sont disposés dans un boîtier de phare de véhicule (101) et le troisième module d'éclairage (107) est constitué comme un module d'éclairage supplémentaire (121) et est disposé en dehors du boîtier de phare de véhicule (101) .

13. Dispositif d'éclairage selon l'une quelconque des revendications 1 à 12, **caractérisé en ce que** les segments (30) sont constitués de façon rectangulaire et la limite inférieure (25) passe en ligne droite.

14. Phare de véhicule avec au moins un dispositif d'éclairage selon l'une quelconque des revendications 1 à 13.

15. Véhicule automobile avec au moins un, de préférence avec deux phares de véhicule selon la revendication 14.
